# EUROPEAN PATENT APPLICATION

(11) **EP 4 793 688 A1**
(43) Date of publication of application: **19.08.2026**
(21) Application number: 24876556.2
(22) Date of filing: 09.10.2024
(51) Int. Cl.: G02B 27/01

(54) **OPTICAL WAVEGUIDE LENS AND AUGMENTED REALITY DEVICE**

(30) Priority: 11.10.2023 CN 202311312768
(71) Applicant: Meta-Bounds Inc., Zhuhai, Guangdong 519000 (CN)
(72) Inventor: LAN, Fuyang, Zhuhai, Guangdong 519000 (CN); GUAN, Jian, Zhuhai, Guangdong 519000 (CN); MA, Guoqing, Zhuhai, Guangdong 519000 (CN); LIANG, Zhousheng, Zhuhai, Guangdong 519000 (CN); ZHOU, Xing, Zhuhai, Guangdong 519000 (CN); WANG, Zhaomin, Zhuhai, Guangdong 519000 (CN)
(74) Representative: Agca Kizil, Tugce
(86) International application number: PCT/CN2024/123747
(87) International publication number: WO 2025/077743

(57) **Abstract**

An optical waveguide lens and an augmented reality device are provided. The optical waveguide lens includes at least two waveguide layers, a protective layer, and a support structure. The waveguide layers are spaced apart and located on the same side of the protective layer. The waveguide layers and the protective layer are spaced apart. The support structure is disposed between two adjacent waveguide layers and/or between an adjacent waveguide layer and the protective layer. The support structure is configured to maintain a spacing between two adjacent waveguide layers and/or between an adjacent waveguide layer and the protective layer.

## Description

This application is a National Stage of International Application No. PCT/CN2024/123747, filed on Oct. 9, 2024, which claims the benefit of priority to Chinese Patent Application No. 2023113127688 entitled "Optical Waveguide Lens and Augmented Reality Device" and filed with China National Intellectual Property Administration on Oct. 11, 2023, the entire contents of which are incorporated by reference herein.

### Technical Field

The present disclosure relates to the technical field of augmented reality, and in particular, to an optical waveguide lens and an augmented reality device.

### Background Art

An optical module of an augmented reality (AR) near-eye display device generally includes two parts: an optical machine (also referred to as an optical engine) and an optical combiner. The optical machine includes an image source and a projection lens. The image source is configured to generate an image to be displayed, and the projection lens is configured to project the image displayed by the image source to infinity or a specified distance. The optical combiner can directionally transmit signal light emitted by the optical machine to the human eye, forming the image to be displayed on the retina. Meanwhile, the optical combiner has good transmittance to ambient light of the real world, and through the optical combiner, the human eye can clearly perceive both real-world scenery and the image projected by the optical machine. Due to the characteristics of thin thickness, light weight and excellent light transmittance, the optical waveguide lens has become a preferred solution for the optical combiner.

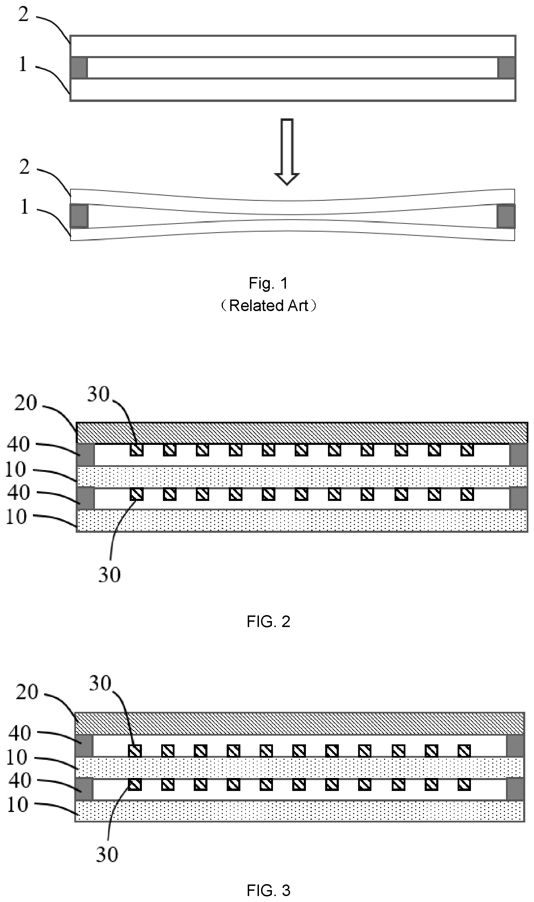

As shown in FIG. 1, an optical waveguide lens generally includes at least one diffractive waveguide layer 1 and a protective layer 2. The diffractive waveguide layer 1 and the protective layer 2 are bonded together via an adhesive. An in-coupling grating and an out-coupling grating are disposed on the surface of each diffractive waveguide layer. The in-coupling grating is configured to couple light emitted by the optical machine into the diffractive waveguide layer and cause total internal reflection. After total internal reflection within the diffractive waveguide layer, the light is transmitted to the out-coupling grating. The out-coupling grating diffracts the light in the diffractive waveguide layer into free space, and after entering the human eye, the light forms a virtual image to be displayed on the retina. In addition to the in-coupling grating and the out-coupling grating, a deflecting grating may also be disposed on the surface of each diffractive waveguide layer to meet requirements such as exit pupil expansion.

The diffractive waveguide layer 1 and the protective layer 2 may undergo surface deformation due to their own residual stress and the influence of external environmental factors (e.g., changes in temperature and humidity). After the surface profiles of the diffractive waveguide layer 1 and the protective layer 2 change, the diffractive waveguide layer 1 and the protective layer 2 can no longer remain parallel and come into contact with each other, thus degrading the appearance and display performance of the lens.

### Summary of the Invention

The technical problem solved by the present disclosure is poor appearance and degraded display performance of each layer of an optical waveguide lens caused by material deformation under stress.

The present disclosure provides an optical waveguide lens, which includes at least two waveguide layers, a protective layer, and a support structure, wherein the waveguide layers are spaced apart and located on the same side of the protective layer, the waveguide layers are spaced apart from the protective layer, the support structure is disposed between two adjacent waveguide layers and/or between an adjacent waveguide layer and the protective layer, and the support structure is configured to maintain a spacing between two adjacent waveguide layers and/or between an adjacent waveguide layer and the protective layer when the waveguide layer and/or the protective layer deforms.

The present disclosure further discloses an augmented reality device, which includes the above optical waveguide lens.

The optical waveguide lens and an augmented reality device in the present disclosure include the following technical effects:
In the optical waveguide lens provided by the present disclosure, a support structure is disposed between an adjacent waveguide layer and a protective layer and/or between adjacent waveguide layers. When the waveguide layer and the protective layer approach each other due to deformation, the support structure maintains a gap between the waveguide layer and the protective layer and/or between the waveguide layers to avoid contact, thus ensuring the display performance of the optical waveguide lens.

### Brief Description of the Drawings

FIG. 1 is a schematic diagram illustrating an optical waveguide lens in related art before and after deformation.
FIG. 2 is a cross-sectional schematic diagram illustrating an optical waveguide lens according to one embodiment of the present disclosure, in which support structures are disposed on both a waveguide layer and a protective layer.
FIG. 3 is a cross-sectional schematic diagram illustrating an optical waveguide lens according to one embodiment of the present disclosure, in which a support structure is disposed on a waveguide layer.
FIG. 4 is a cross-sectional schematic diagram illustrating an optical waveguide lens according to one embodiment of the present disclosure, in which a support structure is disposed on a protective layer.
FIG. 5 is a schematic diagram illustrating the distribution of support protrusions according to one embodiment of the present disclosure.
FIG. 6 is a schematic diagram illustrating various support protrusions with different structures according to one embodiment of the present disclosure.
FIG. 7 is a schematic diagram illustrating the array distribution of a plurality of support protrusions according to one embodiment of the present disclosure.
FIG. 8 is a schematic diagram illustrating the concentric circle distribution of a plurality of support protrusions according to one embodiment of the present disclosure.
FIG. 9 is a schematic diagram illustrating the equidistant distribution of a plurality of support protrusions according to one embodiment of the present disclosure.

### List of Reference Signs:

10-waveguide layer, 11-through hole, 20-protective layer, 30-support structure, 31-support protrusion, 40-adhesive layer.

### Detailed Description of Embodiments

To make the objectives, technical solutions and advantages of the present disclosure clearer, the present disclosure will be further described in detail below with reference to the drawings and embodiments. It should be understood that the specific embodiments described herein are configured to illustrate the present disclosure and are not intended to limit the present disclosure.

Before describing each embodiment of the present disclosure in detail, the technical concept of the present disclosure is described briefly first: current augmented reality devices can be applied to various scenarios. In different scenarios, the augmented reality devices may also be subject to external extrusion. For example, an optical waveguide lens deforms under extrusion, or a protective layer and waveguide layers attach to each other due to deformation caused by changes in temperature and humidity or their own residual stress, thus degrading the appearance and display performance of the lens. Thus, in the optical waveguide lens provided by the present disclosure, a support structure is disposed between an adjacent waveguide layer and a protective layer and/or between adjacent waveguide layers. When the waveguide layer and the protective layer approach each other due to deformation, the support structure maintains a gap between the waveguide layer and the protective layer and/or between the waveguide layers to avoid contact, thus ensuring the display performance of the optical waveguide lens. The specific structure of the optical waveguide lens of the present disclosure will be described below with reference to more embodiments.

Specifically, as shown in FIG. 2, FIG. 3 and FIG. 4, the optical waveguide lens in one embodiment includes at least two waveguide layers 10, a protective layer 20 and a support structure 30. Waveguide layers 10 are spaced apart and located on the same side of the protective layer 20. The waveguide layers 10 are spaced apart from the protective layer 20. The support structure 30 is disposed between two adjacent waveguide layers 10 and/or between an adjacent waveguide layer 10 and the protective layer 20. When the waveguide layers 10 and/or the protective layer 20 deform, the support structure 30 is configured to maintain a spacing between two adjacent waveguide layers 10 and/or between an adjacent waveguide layer 10 and the protective layer 20.

Exemplarily, the protective layer 20 may be an outer protective layer or an inner protective layer. When the protective layer 20 is the outer protective layer, each waveguide layer 10 is located on an inner side of the protective layer 20, and the inner side is a side of the protective layer 20 adjacent to the optical machine and also a side adjacent to a user, so that the waveguide layers are protected by the protective layer 20. When the protective layer 20 is the inner protective layer, each waveguide layer 10 is located on an outer side of the protective layer 20, and the outer side is a side of the protective layer 20 far away from the optical machine and also a side far away from the user, so that the waveguide layers 10 are protected by the protective layer 20.

Exemplarily, the waveguide layers 10, as well as the adjacent waveguide layer 10 and the protective layer 20, may be bonded and fixed via an adhesive layer 40, forming a sealed air layer between each pair of adjacent waveguide layers 10 and between the adjacent waveguide layer 10 and the protective layer 20.

Exemplarily, the adhesive layer 40 may be a ring-shaped adhesive.

Exemplarily, the ring-shaped adhesive is disposed at edges of the waveguide layer 10 and the protective layer 20.

In one embodiment, a support structure 30 is disposed between two adjacent waveguide layers 10 and between each adjacent waveguide layer 10 and the protective layer 20, which can prevent contact between the layers to the greatest extent. When the support structure 30 is disposed between two adjacent waveguide layers 10, the support structure 30 is disposed on either one of the two adjacent waveguide layers 10. When the support structure 30 is disposed between an adjacent waveguide layer 10 and the protective layer 20, the support structure 30 is disposed on the waveguide layer 10 or the protective layer 20. For example, the support structure 30 may be fixed to the waveguide layer 10, and when the waveguide layer 10 and the protective layer 20 are not deformed, the support structure 30 is not in contact with the protective layer 20; after deformation of the waveguide layer 10 or the protective layer 20, the support structure 30 abuts against the protective layer 20 to prevent the waveguide layer 10 and the protective layer 20 from approaching each other further. Similarly, the support structure 30 may be fixed to the protective layer 20, and when the waveguide layer 10 and the protective layer 20 are not deformed, the support structure 30 is not in contact with the waveguide layer 10; after deformation of the waveguide layer 10 or the protective layer 20, the support structure 30 abuts against the waveguide layer 10 to prevent the waveguide layer 10 and the protective layer 20 from approaching each other further.

In one embodiment, the support structure 30 is disposed on an inner surface of the protective layer 20 facing the waveguide layer 10. The support structure 30 is configured to abut against the waveguide layer 10 when the waveguide layer 10 and/or the protective layer 20 deform and the waveguide layer 10 and the protective layer 20 approach each other, preventing the waveguide layer 10 and the protective layer 20 from approaching each other further.

In other embodiments, the support structure 30 may be disposed on the adhesive layer 40. For example, one end of the support structure 30 is fixed to the adhesive layer 40, and the other end of the support structure 30 extends into a gap between the waveguide layer 10 and the protective layer 20. When the waveguide layer 10 and/or the protective layer 20 deform and the waveguide layer 10 and the protective layer 20 approach each other, the other end of the support structure 30 contacts both the waveguide layer 10 and the protective layer 20, so as to maintain a certain spacing between the waveguide layer 10 and the protective layer 20.

Furthermore, in one embodiment, an elastic modulus of the protective layer 20 is less than an elastic modulus of the waveguide layer 10, and an air layer between two adjacent waveguide layers 10 communicates with an air layer between an adjacent waveguide layer 10 and the protective layer 20. When the optical waveguide lens is in an environment with high air pressure, the waveguide layer 10 and the protective layer 20 deform under compression. External pressure is concentrated on the protective layer 20 and the outermost waveguide layer 10. Since the elastic modulus of the protective layer 20 is less than the elastic modulus of the waveguide layer 10, the protective layer 20 deforms first, reducing the air pressure difference inside and outside the optical waveguide lens. At the same time, part of the air between the waveguide layer 10 and the protective layer 20 flows into the space between the waveguide layers 10, reducing deformation of the outermost waveguide layer 10. In this embodiment, the support structure 30 may be disposed between an adjacent waveguide layer 10 and the protective layer 20 to prevent the protective layer 20 from deforming excessively and abutting against the waveguide layer 10. The outermost waveguide layer 10 will not deform excessively due to a relatively large elastic modulus and internal gas flow, and thus does not need to be supported by the support structure 30.

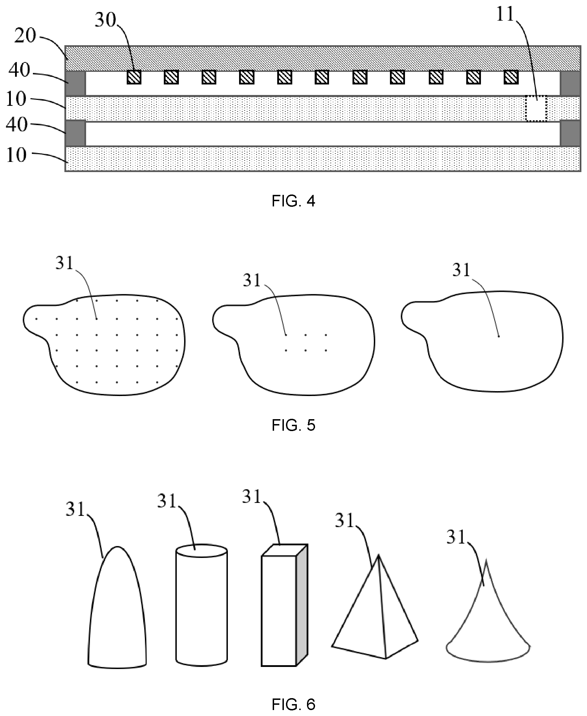

Exemplarily, as shown in FIG. 4, in order to achieve communication between the air layers, through holes 11 may be formed in all waveguide layers 10 except the outermost waveguide layer 10. The through holes 11 communicate the air layer between two adjacent waveguide layers 10 and the air layer between the adjacent waveguide layer 10 and the protective layer 20. The through holes 11 are offset from the support structure 30, so as to prevent the ventilation process of the through holes 11 from being affected by the support structure 30, and also prevent the support structure 30 from sinking into the through holes 11 and failing to provide support.

Exemplarily, as shown in FIG. 5, the support structure 30 includes a plurality of spaced-apart support protrusions 31. The plurality of support protrusions 31 are disposed on a surface of the waveguide layer 10 and/or a surface of the protective layer 20. The plurality of support protrusions 31 may be uniformly distributed, or densely distributed in a central region and sparsely distributed in an edge region. In some embodiments, the support structure 30 may also be a single support protrusion 31, and the support protrusion 31 is disposed at a center of the surface of the waveguide layer 10 and/or a center of the surface of the protective layer 20. As shown in FIG. 6, the support protrusion 31 may be cylindrical, prismatic, a prismatic frustum, a conical frustum, conical, pyramidal, stalactitic, or other similar shapes. A bottom end of the support protrusion 31 is attached to the surface of the waveguide layer 10 or the protective layer 20, while a top end thereof is suspended.

In some embodiments, a diameter of the support protrusion 31 ranges from 1 µm to 100 µm.

Furthermore, the diameter of the support protrusion 31 ranges from 20 µm to 50 µm.

In some embodiments, a height of the support protrusion 31 ranges from 1 µm to 100 µm.

Furthermore, the height of the support protrusion 31 ranges from 5 µm to 20 µm.

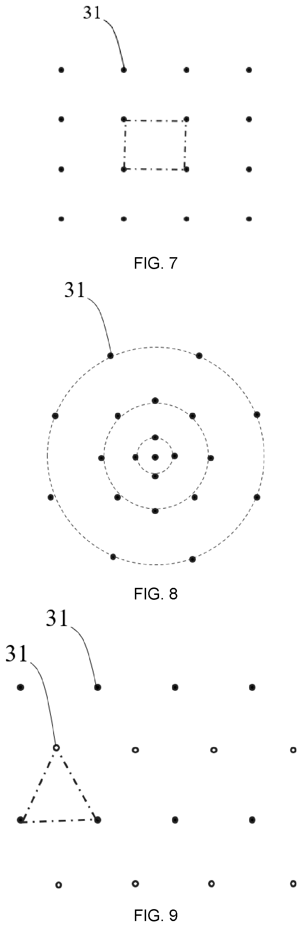

In one embodiment, as shown in FIG. 7, the plurality of support protrusions 31 are arranged in an array, and a row spacing of the array is equal to a column spacing of the array. The plurality of support protrusions 31 that are uniformly distributed can provide uniform support for the waveguide layer 10 and the protective layer 20, which is beneficial for coping with deformation in different regions.

In some embodiments, the row spacing and column spacing of the array distribution range from 0.5 mm to 10 mm.

Furthermore, the row spacing and column spacing of the array distribution range from 2 mm to 5 mm.

In another embodiment, as shown in FIG. 8, the plurality of support protrusions 31 are arranged in concentric circles. The support protrusions 31 on the same circle are equally spaced. The number of concentric circles may be set according to actual needs. Exemplarily, the radius difference between any two adjacent concentric circles is the same. For example, in a direction outward from the center, the radius difference between a first circle and a second circle is equal to the radius difference between the second circle and a third circle, and so on, achieving uniform distribution of the support protrusions 31. In other embodiments, denser support protrusions 31 may also be provided in a region adjacent to the center, and sparser support protrusions 31 may be provided in a region far away from the center.

Furthermore, in another embodiment, as shown in FIG. 9, the plurality of support protrusions 31 are arranged in a plurality of rows. The support protrusions 31 located in odd-numbered rows are arranged in a first array, as shown by solid dots in FIG. 9, and the support protrusions 31 located in even-numbered rows are arranged in a second array, as shown by hollow dots in FIG. 9. A row spacing of the first array is equal to a row spacing of the second array, and a column spacing of the first array is equal to a column spacing of the second array. The row spacing of the first array is -J3 times the column spacing of the first array. A first row of support protrusions in the second array is located midway between a first row and a second row of support protrusions in the first array. A first column of support protrusions in the second array is located midway between a first column and a second column of support protrusions in the first array. Similarly, a second row of support protrusions in the second array is located midway between the second row and a third row of support protrusions in the first array. A second column of support protrusions in the second array is located midway between the second column and a third column of support protrusions in the first array. In this distribution pattern, the plurality of support protrusions 31 are periodically arranged in an equilateral triangular pattern, which ensures equal distances between any adjacent support protrusions 31, meaning that the waveguide layer 10 and the protective layer 20 have the same resistance to deformation at all positions.

Exemplarily, the material of the support structure 30 may be resin or glass.

Furthermore, the support structure 30 may be formed on the protective layer 20 or the waveguide layer 10. For example, the support structure 30 may be formed on the protective layer 20 or the waveguide layer 10 via at least one of steel mesh screen printing, photolithography, coating, nanoimprinting, a semiconductor fabrication process, and the like. In other embodiments, the support structure 30 may be integrally formed with the protective layer 20 or the waveguide layer 10, that is, the support structure 30 is formed at the same time as the protective layer 20 or the waveguide layer 10 is prepared.

Furthermore, when the support structure 30 is disposed on the protective layer 20, a projection of the support structure 30 onto the waveguide layer 10 is offset from a grating region of the waveguide layer 10. In one embodiment, when the support structure 30 includes a plurality of spaced-apart support protrusions 31, the support protrusions 31 are disposed on the protective layer 20 outside a region opposite to the grating region of the waveguide layer 10. When the waveguide layer 10 and/or the protective layer 20 deform and the waveguide layer 10 and the protective layer 20 approach each other, the support protrusions 31 abut against a non-grating region of the waveguide layer 10, preventing the support protrusions 31 from damaging the grating on the waveguide layer 10. The grating region of the waveguide layer 10 includes an in-coupling grating region, a deflecting grating region, and an out-coupling grating region. When the support structure 30 is disposed on the waveguide layer 10, the support structure 30 is disposed on the non-grating region of the waveguide layer 10.

Another embodiment further discloses an augmented reality device including the optical waveguide lens according to any one of the foregoing embodiments. The augmented reality device is applicable to scenarios such as external force extrusion or changes in temperature and humidity. The support structure prevents excessive deformation of the optical waveguide lens, ensuring the display performance of the optical waveguide lens and improving the visual experience of the augmented reality device.

The augmented reality device may be, for example, augmented reality glasses. In the example of augmented reality glasses, the augmented reality device may be configured to transmit data to and receive data from an external processing device via a signal connection, which may be a wired connection, a wireless connection, or a combination of a wired connection and a wireless connection. However, in other cases, the augmented reality device may be used as a standalone device, meaning data processing can be performed within the augmented reality device itself. The signal connection may be configured to carry any type of data, such as image data (e.g., still images and/or full-motion video, including 2D and 3D images), audio, multimedia, voice, and/or any other type of data. The external processing device may be, for example, a game console, a personal computer, a tablet computer, a smartphone, or another type of processing device. The signal connection may be, for example, a Universal Serial Bus (USB) connection, a Wi-Fi connection, a Bluetooth or Bluetooth Low Energy (BLE) connection, an Ethernet connection, a cable connection, a DSL connection, a cellular connection (e.g., 3G, LTE/4G, or 5G), or a combination of the foregoing connections. Additionally, the external processing device may communicate with one or more other external processing devices via a network, which may include, for example, a Local Area Network (LAN), a Wide Area Network (WAN), an intranet, a Metropolitan Area Network (MAN), the global Internet, or a combination of the foregoing networks.

It should be noted that a complete pair of augmented reality glasses should also include other necessary basic components, but such components are not the focus of the present embodiment and therefore not shown in the figures or described in detail in the specification. Moreover, such components are well-known to those skilled in the art.

The specific embodiments of the present disclosure have been described in detail above. Although some embodiments have been shown and described, it will be understood by those skilled in the art that modifications and improvements may be made to these embodiments without departing from the principles and spirit of the present disclosure as defined by the appended claims and their equivalents, and such modifications and improvements should also fall within the protection scope of the present disclosure.

## Claims

1. An optical waveguide lens, comprising at least two waveguide layers (10), a protective layer (20), and a support structure (30), wherein the waveguide layers (10) are spaced apart and located on the same side of the protective layer (20), the waveguide layers (10) are spaced apart from the protective layer (20), the support structure (30) is disposed between two adjacent waveguide layers (10) and/or between an adjacent waveguide layer (10) and the protective layer (20), and the support structure (30) is configured to maintain a spacing between two adjacent waveguide layers (10) and/or between an adjacent waveguide layer (10) and the protective layer (20) when the waveguide layer (10) and/or the protective layer (20) deforms.

2. The optical waveguide lens according to claim 1, wherein when the support structure (30) is disposed between two adjacent waveguide layers (10), the support structure (30) is disposed on either one of the two adjacent waveguide layers (10); and when the support structure (30) is disposed between an adjacent waveguide layer (10) and the protective layer (20), the support structure (30) is disposed on the waveguide layer (10) or the protective layer (20).

3. The optical waveguide lens according to claim 1, wherein an elastic modulus of the protective layer (20) is less than an elastic modulus of the waveguide layer (10), and an air layer between two adjacent waveguide layers (10) communicates with an air layer between an adjacent waveguide layer (10) and the protective layer (20).

4. The optical waveguide lens according to claim 3, wherein through holes (11) are formed in all waveguide layers (10) except the outermost waveguide layer (10), and the through holes (11) communicate the air layer between two adjacent waveguide layers (10) and the air layer between an adjacent waveguide layer (10) and the protective layer (20).

5. The optical waveguide lens according to claim 4, wherein the through holes (11) are offset from the support structure (30).

6. The optical waveguide lens according to claim 3, wherein the support structure (30) is disposed between an adjacent waveguide layer (10) and the protective layer (20).

7. The optical waveguide lens according to claim 2, wherein the support structure (30) comprises a plurality of spaced-apart support protrusions (31).

8. The optical waveguide lens according to claim 7, wherein the plurality of support protrusions (31) are arranged in an array, and a row spacing of the array is equal to a column spacing of the array.

9. The optical waveguide lens according to claim 7, wherein the plurality of support protrusions (31) are arranged in concentric circles, and the support protrusions (31) on the same circle are equally spaced.

10. The optical waveguide lens according to claim 7, wherein the plurality of support protrusions (31) are arranged in a plurality of rows, the support protrusions (31) located in odd-numbered rows are arranged in a first array, and the support protrusions (31) located in even-numbered rows are arranged in a second array; a row spacing of the first array is equal to a row spacing of the second array, a column spacing of the first array is equal to a column spacing of the second array, and the row spacing of the first array is $\sqrt{3}$ times the column spacing of the first array; and a first row of support protrusions (31) in the second array is located midway between a first row and a second row of support protrusions (31) in the first array, and a first column of support protrusions (31) in the second array is located midway between a first column and a second column of support protrusions (31) in the first array.

11. The optical waveguide lens according to claim 1, wherein when the support structure (30) is disposed on the protective layer (20), a projection of the support structure (30) onto the waveguide layer (10) is offset from a grating region of the waveguide layer (10); or
when the support structure (30) is disposed on the waveguide layer (10), the support structure (30) is disposed on a non-grating region of the waveguide layer (10).

12. The optical waveguide lens according to claim 1, wherein the material of the support structure (30) is resin or glass.

13. The optical waveguide lens according to claim 1, wherein the support structure (30) is formed on the protective layer (20) or the waveguide layer (10) via at least one of steel mesh screen printing, photolithography, coating, nanoimprinting, and a semiconductor process; or
the support structure (30) is integrally formed with the protective layer (20) or the waveguide layer (10).

14. An augmented reality device, comprising the optical waveguide lens according to any one of claims 1 to 13.
